# EUROPÄISCHE PATENTSCHRIFT

(11) **EP 1 331 090 B1**
(45) Veröffentlichungstag und Bekanntmachung des Hinweises auf die Patenterteilung: **16.08.2006**
(21) Anmeldenummer: 03000241.4
(22) Anmeldetag: 08.01.2003
(51) Int. Cl.: B32B 27/12, B32B 5/26, B32B 37/15

(54) **Verfahren zur Herstellung einer elastischen, luftdurchlässigen Verbundfolie**
Process for the preparation of an elastic breathable composite sheet
Procédé pour la préparation d'une feuille composite élastique respirante

(30) Priorität: 23.01.2002 DE 10202333
(43) Veröffentlichungstag der Anmeldung: 30.07.2003
(73) Patentinhaber: Nordenia Deutschland Gronau GmbH, 48599 Gronau (DE)
(72) Erfinder: Hamulski, Markus, 48599 Gronau-Epe (DE); Schönbeck, Marcus, 33775 Versmold (DE); Baldauf, Georg, 48366 Laer (DE)
(74) Vertreter: Albrecht, Rainer Harald

(56) Entgegenhaltungen:
- EP-A- 1 112 823
- WO-A-01/54900
- DE-A- 4 238 541
- US-A- 3 949 127
- US-A- 5 554 246
- US-A- 5 789 065
- US-A- 5 879 494

## Beschreibung

Die Erfindung betrifft ein Verfahren zur Herstellung einer elastischen, luftdurchlässigen Verbundfolie, die eine elastomere Zwischenschicht und beidseitige Außenschichten aus Faservliesstoff ausweist. Eine derartige Verbundfolie wird beispielsweise bei der Fabrikation von Windelhöschen als elastische Abschlussmanschette verwendet. Sie muss elastisch und weitgehend flüssigkeitsdicht sein. Zur Verbesserung des Tragekomforts besitzt sie eine textile Oberfläche und ist luftdurchlässig.

Bei einem aus DE 42 38 541 A1 bekannten Verfahren werden aus Faservliesstoff bestehende Materialbahnen beidseits auf eine vorgefertigte und gedehnte elastomere Trägerfolie aufgebracht und durch Ultraschallschweißung punktförmig mit der Trägerfolie verbunden. An den Schweißstellen wird die Trägerfolie durchgeschmolzen, wobei die außenseitigen Vliesbahnen miteinander verbunden und in das partiell aufschmelzende Material der Trägerfolie eingebunden werden. Dabei entstehen luftdurchlässige Bereiche, die von einer feinen, aus Vliesfäden erhaltenen Netzstruktur überdeckt sind. Um eine ausreichend feste Verbindung der Lagen herzustellen, ist eine große Zahl gleichmäßig über die Materialbahn verteilter Punktschweißungen erforderlich. Dadurch liegt auch die Verteilung der luftdurchlässigen Stellen fest. Bei dem bekannten Verfahren besteht keine Möglichkeit, die Anordnung der luftdurchlässigen Bereiche anwendungsbezogen festzulegen und beispielsweise auf bestimmte Abschnitte der Verbundfolie zu konzentrieren. Auch die Verbundfestigkeit der bekannten Verbundfolie ist noch verbesserungsbedürftig.

Bei einem aus WO 01/54900 A1 bekannten Verfahren zur Herstellung einer elastischen Verbundfolie wird ein Schmelzefilm aus thermoplastischem Elastomer einem Kaschierwerk zugeführt und im thermoplastifizierten Zustand zwischen zwei in das Kaschierwerk einlaufenden Materialbahnen aus Faservliesstoff eingebracht. Die schmelzeflüssige Zwischenschicht des mehrschichtigen Materials wird auf Erstarrungstemperatur gekühlt und dadurch ein Kaschierverbund mit aus Faservliesstoff bestehenden Deckschichten hergestellt. Das Material ist nicht luftdurchlässig.

Aus US 5 554 246 ist es bekannt, einen Kaschierverbund nachträglich zu perforieren und dadurch luftdurchlässig zu machen. Zum Perforieren werden Stanzwerkzeuge in Form von stachelförmigen Walzen verwendet. Die Stanzwerkzeuge durchdringen das Verbundmaterial mechanisch.

Der Erfindung liegt die Aufgabe zugrunde, ein Verfahren zur Herstellung einer elastischen, luftdurchlässigen Verbundfolie anzugeben, mit dem ein Material hoher Verbundfestigkeit gefertigt werden kann und bei dem die luftdurchlässigen Bereiche anwendungsbezogen festgelegt werden können. Dabei soll die Zahl der Verfahrensschritte möglichst gering sein, damit die Verbundfolie kostengünstig gefertigt werden kann.

Gegenstand der Erfindung und Lösung dieser Aufgabe ist ein Verfahren zur Herstellung einer elastischen, luftdurchlässigen Verbundfolie, die eine elastomere Zwischenschicht und beidseitige Außenschichten aus Faservliesstoff aufweist, bei dem
a) ein Schmelzefilm aus thermoplastischem Elastomer einem Kaschierwerk zugeführt und im thermoplastifizierten Zustand zwischen zwei in das Kaschierwerk einlaufenden Materialbahnen aus Faservliesstoff eingebracht wird,
b) die schmelzeflüssige Zwischenschicht des mehrschichtigen Materials auf Erstarrungstemperatur gekühlt und dadurch ein Kaschierverbund mit aus Faservliesstoff bestehenden Deckschichten hergestellt wird und
c) der Kaschierverbund anschließend einer Ultraschallschweißstation zugeführt wird, in der die elastomere Zwischenschicht durch punktförmige Schweißungen unter Beibehaltung der Substanz des Faservliesstoffes an diskreten Stellen durch Ultraschall aufgeschmolzen wird, wobei an den aufgeschmolzenen Stellen luftdurchlässige Strukturen entstehen.

Die Kühlung der schmelzflüssigen Zwischenschicht erfolgt zweckmäßig an einer gekühlten Stahlwalze in einem von zwei Walzen begrenzten Walzenspalt des Kaschierwerkes. In der sich an das Kaschierwerk anschließenden Ultraschallschweißstation wird die Elastomerschicht an diskreten Stellen durch punktförmige Schweißungen aufgeschmolzen, wobei die Deckschichten ihre faserförmigen Strukturen beibehalten. Es ergeben sich luftdurchlässige Bereiche, die von einer feinen Faserstruktur der äußeren Schichten überdeckt sind. Beim partiellen Aufschmelzen der im Kaschierwerk abgekühlten und erstarrten Elastomerschicht werden die Fasern der Deckschichten in das thermoplastifizierte Material der Elastomerschicht eingebunden. Diese zusätzliche Fixierung des Vliesstoffes verstärkt den schon vorhandenen Materialverbund.

Vorzugsweise wird der Kaschierverbund in der Ultraschallschweißstation über eine Schweißwalze mit umfangsseitig vorstehenden Schweißstacheln geführt, wobei an den Kontaktflächen zwischen den Schweißstacheln und dem Kaschierverbund Ultraschallschwingungen erzeugt werden. Das Ultraschallwerkzeug kann insbesondere in Form von zwei Walzen ausgeführt werden, wobei eine Walze eine glatte Umfangsfläche aufweist und ein Widerlager für den Schweißvorgang bildet und die andere Walze als Schweißwalze mit umfangsseitig vorstehenden Schweißstacheln ausgebildet ist und die Sonotrode des Werkzeuges darstellt.

In weiterer Ausgestaltung lehrt die Erfindung, dass der aus einem elastomerem Material bestehende Schmelzefilm in parallelen, zueinander beabstandeten Streifen dem Kaschierwerk zugeführt und zwischen die aus Faservliesstoff bestehenden Materialbahnen eingebracht wird. Dabei werden die aus Faservliesstoff bestehenden Materialbahnen in den Bereichen zwischen den Schmelzefilmstreifen miteinander verklebt, wobei der Klebstoff vor dem Einlauf der Materialbahnen in das Kaschierwerk streifenförmig auf mindestens eine der beiden Materialbahnen aufgetragen wird. Als Kleber sind beispielsweise Hotmeltkleber einsetzbar, die auf die Materialbahn aufgesprüht werden können. Die Sprühdüsen können nahe der gekühlten Stahlwalze des Kaschierwerkes angeordnet werden. Im Anschluss an das Kaschierwerk durchläuft die Materialverbundbahn die Ultraschallschweißstation, in der in der schon beschriebenen Weise durchlässige Strukturen in den elastischen Abschnitten des Verbundmaterials erzeugt werden.

Im Rahmen der Erfindung liegt es auch, dass durch Coextrusion ein mehrlagiger Schmelzefilm hergestellt und im thermoplastifizierten Zustand zwischen die in das Kaschierwerk einlaufenden Materialbahnen aus Faservliesstoff eingebracht wird, wobei zumindest eine Schicht des Schmelzefilms aus einem thermoplastischem Elastomer besteht. Das Material der mit dem Faservliesstoff in Kontakt tretenden Schichten kann nach zusätzlichen Gesichtspunkten festgelegt und optimiert werden. Es ergeben sich Vorteile, wie z.B. eine bessere Kontrolle der Verbundhaftung zwischen dem elastischen Kern der Folie und dem außenseitigen Faservliesstoff. Durch geeignete Festlegung des Materials kann ferner die Beständigkeit der Verbundfolie gegen Umwelteinflüsse und gegen Substanzen, z.B. in Hautschutzmitteln verbessert werden. Die Verwendung eines durch Coextrusion hergestellten mehrlagigen Schmelzefilms ist bei allen zuvor beschriebenen Ausgestaltungen des erfindungsgemäßen Verfahrens möglich.

Der nach dem erfindungsgemäßen Verfahren hergestellte Kaschierverbund kann anschließend in Längsrichtung und/oder quer zur Abzugsrichtung gereckt oder einer inkrementalen Verstreckung unterworfen werden. Durch die Nachbehandlung erhält die Verbundfolie in den verstreckten Bereichen eine höhere Elastizität.

Im Folgenden wird die Erfindung anhand einer lediglich ein Ausführungsbeispiel darstellenden Zeichnung ausführlicher erläutert. Es zeigen
- Fig. 1: ein Verfahrensschema des erfindungsgemäßen Verfahrens,
- Fig. 2: eine weitere Ausgestaltung des erfindungsgemäßen Verfahrens.

Das in den Figuren dargestellte Verfahren dient der Herstellung einer elastischen, luftdurchlässigen Verbundfolie, die eine elastomere Zwischenschicht und Deckschichten aus einem Faservliesstoff aufweist.

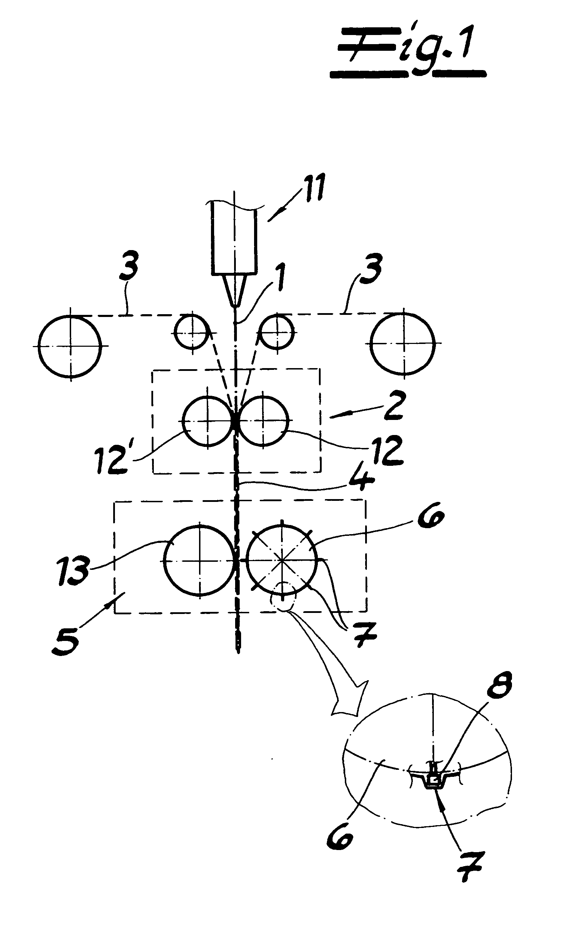

Bei dem in Fig. 1 dargestellten Verfahren wird durch Extrusion ein Schmelzefilm 1 aus einem thermoplastischen Elastomer hergestellt und einem Kaschierwerk 2 zugeführt. Der Schmelzfilm 1 gelangt im thermoplastifizierten Zustand zwischen Materialbahnen 3 aus einem Faservliesstoff, die ebenfalls in das Kaschierwerk 2 einlaufen. Die schmelzeflüssige Zwischenschicht des mehrschichtigen Materials wird auf Erstarrungstemperatur gekühlt, wobei ein Kaschierverbund 4 mit einer elastomeren Zwischenschicht und Deckschichten aus Faservliesstoff entsteht. Der Kaschierverbund 4 wird anschließend einer Ultraschallschweißstation 5 zugeführt, in der die Elastomerschicht durch punktförmige Schweißungen unter Beibehaltung der Substanz des Faservliesstoffes an diskreten Stellen durch Ultraschall aufgeschmolzen wird. Dabei entstehen an den aufgeschmolzenen Stellen luftdurchlässige Strukturen. Für die punktförmigen Ultraschallschweißungen wird eine Schweißwalze 6 verwendet, die umfangsseitig vorstehende Schweißstacheln 7 aufweist. Der Kaschierverbund 4 wird über die Umfangsfläche der Walze 6 geführt, wobei an den Kontaktflächen zwischen den Schweißstacheln 7 und dem Kaschierverbund 4 Ultraschallschwingungen erzeugt werden. Zu diesem Zweck können die Schweißstacheln 7 mit Ultraschallköpfen 8 ausgerüstet sein. Dabei sollen jedoch auch anderweitige Einrichtungen, mit denen punktförmige Ultraschallschweißungen an Kunststofffolien vorgenommen werden können, nicht ausgeschlossen werden.

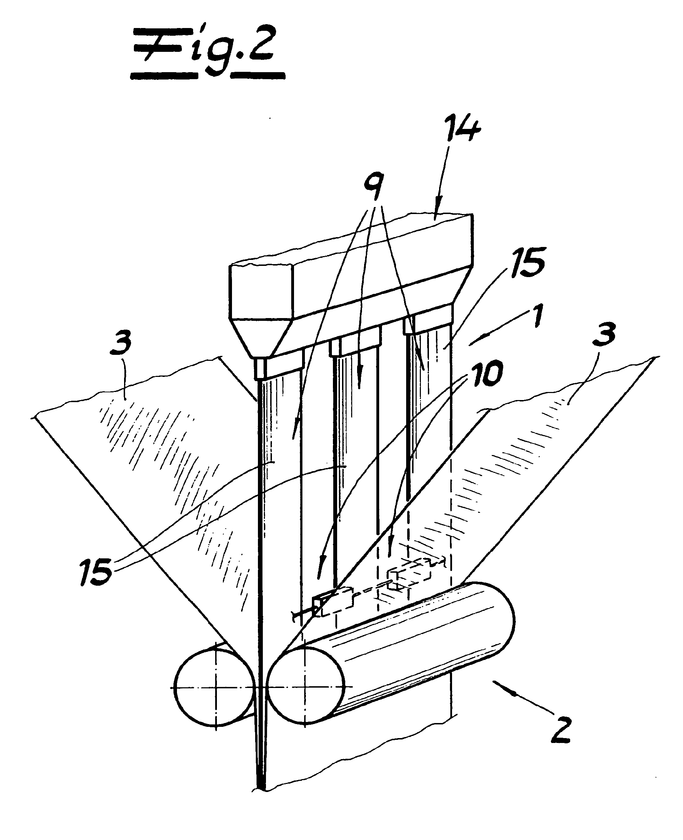

Bei der in Fig. 2 dargestellten Ausgestaltung des erfindungsgemäßen Verfahrens wird der Schmelzefilm 1 in parallelen, zueinander beabstandeten Streifen 9 dem Kaschierwerk 2 zugeführt und zwischen die aus Faservliesstoff bestehenden Materialbahnen 3 eingebracht. Die Vliesstoffbahnen 3 werden in Bereichen 10 zwischen den Schmelzefilmstreifen miteinander verklebt. Im Ausführungsbeispiel erfolgt eine flächige Verklebung dieser Materialbahnen 3, wobei der Klebstoff vor dem Einlauf der Materialbahnen in das Kaschierwerk 2 in Streifen auf mindestens eine der beiden Materialbahnen 3 aufgetragen wird.

Bei dem in Fig. 1 und Fig. 2 dargestellten Verfahren kann als Schmelzefilm auch ein durch Coextrusion hergestellter mehrlagiger Schmelzefilm verwendet werden, der im thermoplastifizierten Zustand zwischen die in das Kaschierwerk einlaufenden Materialbahnen 3 eingebracht wird. Für die Schichten des coextrudierten Films können unterschiedliche Materialien verwendet werden. Zumindest eine Schicht des Schmelzefilms besteht dabei aus einem thermoplastischem Elastomer.

Die nach dem erfindungsgemäßen Verfahren hergestellten Verbundfolien können anschließend in Längsrichtung und/oder quer zur Abzugsrichtung gereckt oder einer inkrementalen Verstreckung unterworfen werden, um die Elastizität des Materials zu verbessern. Für die mechanische Nachbehandlung kann auf bekannte, hier nicht dargestellte Einrichtungen zurückgegriffen werden.

### Beispiel 1

Nach dem in Fig. 1 dargestellten Verfahrensschema wird auf einer Breitschlitzdüsenextrusionsanlage 11 ein Compound auf Basis von Styrolethylenblockcopolymer (SEBS) mit einer Zugabe von Polyethylencopolymer extrudiert. Die Düsenbreite beträgt 1.000 mm. Der Düsenspalt wird auf 0,7 mm eingestellt. Bei einer Temperatur von 200 ±5 °C wird die Schmelze direkt in das Kaschierwerk 2 extrudiert, das eine gekühlte Stahlwalze 12 und eine Gummiwalze 12' aufweist. Zwei Lagen Polypropylenvliesstoff werde abgewickelt und dem Kaschierwerk 2 als außenseitige Materialbahnen 3 zugeführt. Die Polymerschmelze fließt zwischen die beiden Lagen des Polypropylenfaservliesstoffes und wird an der Stahlkühlwalze 12 bis unter die Erstarrungstemperatur abgekühlt. Die Temperatur der Stahlkühlwalze 12 beträgt 60°C. Der Kaschierspalt wird auf 0,09 mm eingestellt. Direkt nach Verlassen des Kaschierwerkes 2 wird das Verbundmaterial der Ultraschweißstation 5 zugeführt und durchläuft ein Schweißwerkzeug aus paarweise angeordneten Walzen 6, 13. Eine Walze 13 besitzt eine glatte Umfangsfläche, die als Werkzeugwiderlager dient. Die andere Walze 6 ist als Schweißwalze mit umfangsseitig vorstehenden Schweißstacheln 7 ausgeführt und stellt die Sonotrode des Werkzeuges dar. Mit dem Ultraschallschweißwerkzeug wird die aus zwei Faservliesstoffbahnen und einer elastomeren Zwischenschicht bestehende Verbundfolie punktuell durchgeschweißt, wobei eine luftdurchlässige Struktur entsteht. An den ultraschallgeschweißten Stellen ist dabei auch die Haftung zwischen den Laminatlagen größer als in den umgebenden Bereichen.

### Beispiel 2

Nach dem in Fig. 2 dargestellten Anlagenschema wird eine spezielle Extrusionsdüse 14 eingesetzt, aus der der Schmelzefilm in parallelen, zueinander beabstandeten Streifen 15 dem Kaschierwerk 2 zugeführt und zwischen die aus Faservliesstoff bestehenden Materialbahnen 3 eingebracht wird. Die aus einem thermoplastischen Elastomer bestehenden Streifen 15 weisen eine Dicke von ca. 100 µm auf und sind 50 mm breit. Der Abstand zwischen den Streifen beträgt jeweils 100 mm. Auf einem der zulaufenden Polypropylenfaservliesstoffe 3 wird streifenförmig ein Heißkleber auf Basis von Styrolisoprenstyrolblockcopolymer (SIS) aufgesprüht. Die Breite der Hotmeltstreifen beträgt 105 mm bei einem Abstand zwischen den Hotmeltstreifen von ca. 40 mm. Die Hotmeltstreifen sind so positioniert, dass eine Verklebung zwischen den beiden Faservliesstoffbahnen in den Bereichen 10 zustande kommt, in denen keine elastomeren Streifen vorhanden sind. Das nach dem beschriebenen Verfahren hergestellte Verbundmaterial wird anschließend in der zuvor beschriebenen Weise durch Ultraschallschweißungen luftdurchlässig gemacht und punktuell gebondet. Es entsteht eine luftdurchlässige Verbundfolie mit elastischen Streifeneinlagen.

## Patentansprüche

1. Verfahren zur Herstellung einer elastischen, luftdurchlässigen Verbundfolie, die eine elastomere Zwischenschicht und beidseitige Außenschichten aus Faservliesstoff aufweist, bei dem
1.1) ein Schmelzefilm aus thermoplastischem Elastomer einem Kaschierwerk zugeführt und im thermoplastifizierten Zustand zwischen zwei in das Kaschierwerk einlaufenden Materialbahnen aus Faservliesstoff eingebracht wird,
1.2) die schmelzeflüssige Zwischenschicht des mehrschichtigen Materials auf Erstarrungstemperatur gekühlt und **dadurch** ein Kaschierverbund mit aus Faservliesstoff bestehenden Deckschichten hergestellt wird und
1.3) der Kaschierverbund anschließend einer Ultraschallschweißstation zugeführt wird, in der die elastomere Zwischenschicht durch punktförmige Schweißungen unter Beibehaltung der Substanz des Faservliesstoffes an diskreten Stellen durch Ultraschall aufgeschmolzen wird, wobei an den aufgeschmolzenen Stellen luftdurchlässige Strukturen entstehen.

2. Verfahren nach Anspruch 1, **dadurch gekennzeichnet, dass** die Kühlung der schmelzeflüssigen Zwischenschicht an einer gekühlten Stahlwalze in einem von zwei Walzen begrenzten Walzenspalt erfolgt.

3. Verfahren nach Anspruch 1 oder 2, **dadurch gekennzeichnet, dass** der Kaschierverbund in der Ultraschallschweißstation über eine Schweißwalze mit umfangsseitig vorstehenden Schweißstacheln geführt wird, wobei an den Kontaktflächen zwischen den Schweißstacheln und dem Kaschierverbund Ultraschallschwingungen erzeugt werden.

4. Verfahren nach einem der Ansprüche 1 bis 3, **dadurch gekennzeichnet, dass** der Schmelzefilm in parallelen, zueinander beabstandeten Streifen dem Kaschierwerk zugeführt und zwischen die aus Faservliesstoff bestehenden Materialbahnen eingebracht wird und dass die aus Faservliesstoff bestehenden Materialbahnen in den Bereichen zwischen den Schmelzefilmstreifen miteinander verklebt werden.

5. Verfahren nach Anspruch 4, **dadurch gekennzeichnet, dass** die Materialbahnen flächig verklebt werden, wobei der Klebstoff vor dem Einlauf der Materialbahnen in das Kaschierwerk in Streifen auf mindestens eine der beiden Materialbahnen aufgetragen wird.

6. Verfahren nach einem der Ansprüche 1 bis 5, **dadurch gekennzeichnet, dass** durch Coextrusion ein mehrlagiger Schmelzefilm hergestellt und im thermoplastifizierten Zustand zwischen die in das Kaschierwerk einlaufenden Materialbahnen aus Faservliesstoff eingebracht wird, wobei zumindest eine Schicht des Schmelzefilms aus einem thermoplastischem Elastomer besteht.

7. Verfahren nach einem der Ansprüche 1 bis 6, **dadurch gekennzeichnet, dass** der die Ultraschallschweißstation verlassende Kaschierverbund in Längsrichtung und/oder quer zur Abzugsrichtung gereckt oder einer inkrementalen Verstreckung unterworfen wird.

## Claims

1. Method for producing an elastic, air-permeable composite film which comprises an elastomeric intermediate layer and outer layers made of fibrous nonwoven on either side thereof, in which:
1.1) a melt film made of thermoplastic elastomer is fed to a laminating unit and is introduced in the thermoplasticized state between two material webs of fibrous nonwoven running into the laminating unit;
1.2) the molten intermediate layer of multilayer material is cooled to solidification temperature and as a result a laminated composite with cover layers made of fibrous nonwoven is formed; and
1.3) the laminated composite is then fed to an ultrasonic welding station, in which the elastomeric intermediate layer is fused by spot welds at discrete locations by means of ultrasound, while retaining the substance of the fibrous nonwoven, wherein air-permeable structures are produced at the fused locations.

2. Method according to Claim 1, **characterized in that** the cooling of the molten intermediate layer takes place on a cooled steel roll in a nip defined by two rolls.

3. Method according to Claim 1 or 2, **characterized in that** the laminated composite in the ultrasonic welding station is passed over a welding roll comprising circumferentially protruding welding pins, wherein ultrasonic vibrations are generated at the contact surfaces between the welding pins and the laminated composite.

4. Method according to one of Claims 1 to 3, **characterized in that** the melt film is fed to the laminating unit in parallel spaced-apart strips and is introduced between the material webs of fibrous nonwoven, and **in that** the material webs of fibrous nonwoven are glued to one another in the areas between the melt film strips.

5. Method according to Claim 4, **characterized in that** the material webs are glued flatly to one another, wherein the adhesive is applied in strips to at least one of the two material webs before the material webs run into the laminating unit.

6. Method according to one of Claims 1 to 5, **characterized in that** a multilayer melt film is produced by coextrusion and is introduced in the thermoplasticized state between the material webs of fibrous nonwoven running into the laminating unit, wherein at least one layer of the melt film is made from a thermoplastic elastomer.

7. Method according to one of Claims 1 to 6, **characterized in that** the laminated composite leaving the ultrasonic welding station is stretched in the longitudinal direction and/or transversely to the discharge direction or is subjected to incremental stretching.

## Revendications

1. Procédé de fabrication d'une feuille multicouche élastique poreuse, qui comporte une couche intermédiaire élastomère et des couches extérieures bilatérales en un non-tissé de fibres, dans lequel
1.1) un film en fusion en élastomère thermoplastique est envoyé dans une contrecolleuse et est introduit dans l'état de thermoplastification entre deux nappes de non-tissé de fibres, admises dans la contrecolleuse,
1.2) la couche intermédiaire liquéfiée du matériau multicouche est refroidie à la température de solidification et un composite contrecollé avec des couches extérieures constituées de non-tissé de fibres est fabriqué de ce fait et
1.3) le composite contrecollé est ensuite dirigé dans un poste de soudage par ultrasons, dans lequel la couche intermédiaire élastomère est fondue par soudages par points par ultrasons en des points discrets, en maintenant la substance du non-tissé, des structures poreuses étant alors formées sur les points fondus.

2. Procédé suivant la revendication 1, **caractérisé en ce que** le refroidissement de la couche intermédiaire liquéfiée s'effectue sur un cylindre d'acier refroidi dans une emprise limitée par deux cylindres.

3. Procédé suivant l'une des revendications 1 et 2, **caractérisé en ce que** le composite contrecollé est guidé dans le poste de soudage par ultrasons par l'intermédiaire d'un cylindre de soudage pourvu de dents de soudage en saillie côté pourtour, des vibrations ultrasonores étant alors produites sur les surfaces de contact entre les dents de soudage et le composite contrecollé.

4. Procédé suivant l'une des revendications 1 à 3, **caractérisé en ce que** le film en fusion est envoyé en rubans parallèles, distants les uns des autres, dans la contrecolleuse et est introduit entre les nappes de matériau constituées de non-tissé de fibres, et que les nappes de matériau constituées de non-tissé de fibres sont collées entre elles dans les zones comprises entre les rubans de film en fusion.

5. Procédé suivant la revendication 4, **caractérisé par** un collage plan des nappes de matériau, la colle étant appliquée en bandes sur l'une au moins des deux nappes de matériau avant l'admission de ces dernières dans la contrecolleuse.

6. Procédé suivant l'une des revendications 1 à 5, **caractérisé en ce qu'**un film en fusion multicouche est fabriqué par coextrusion et est introduit dans l'état de thermoplastification entre les nappes de matériau en non-tissé de fibres, admises dans la contrecolleuse, au moins une couche du film en fusion se composant d'un élastomère thermoplastique.

7. Procédé suivant l'une des revendications 1 à 6, **caractérisé en ce que** le composite contrecollé sortant du poste de soudage par ultrasons est étiré dans la direction longitudinale et/ou transversalement à la direction d'enlèvement ou est soumis à un étirement incrémentiel.
